# EUROPEAN PATENT APPLICATION

(11) **EP 4 779 374 A1**
(43) Date of publication of application: **22.07.2026**
(21) Application number: 25196985.3
(22) Date of filing: 20.08.2025
(51) Int. Cl.: G02B 6/38

(54) **OPTICAL FIBER CONNECTOR**

(30) Priority: 20.01.2025 CN 202510087966
(71) Applicant: Acon Optics Communications Inc., New Taipai City (TW)
(72) Inventor: CUI, Yangyang, New Taipei City (TW); AN, Jilan, New Taipei City (TW)
(74) Representative: Becker, Eberhard

(57) **Abstract**

An optical fiber connector (100,200) includes a housing (110), a ferrule (120) assembled into the housing (110), a securing member (140), and a tail sleeve (150) sheathed onto an exterior of the housing and having a first securing portion (141) and a second securing portion (151) secured to the first securing portion and thus is forced to drive the securing member to pull the optical fiber connector out of an adapter (300). At least one optical fiber (130) is fixed into the ferrule. A portion of the ferrule extends from a first end (E1) of the housing. One end of the optical fiber, distal from the ferrule, extends from a second end (E2) of the housing. The first and second ends are opposite ends. The tail sleeve is sheathed onto the housing from the second end to cover the second end and the optical fiber extending from the second end.

## Description

### BACKGROUND

### Technical Field

The invention relates to an optical fiber connector.

### Description of Related Art

In optical fiber networks, signals are usually paired, with one signal serving for transmission and the other for reception. Optical fiber connection tools may be used to join shorter sections of optical fiber to form a longer optical fiber, to connect optical fibers to active elements, such as light sources or detectors, or to connect optical fibers to passive elements, such as optical switches or attenuators. The main function of optical fiber connectors is to align the cores of the optical fibers with the optical path of the mating element, thereby enabling light beams in the optical fiber to be coupled to the optical path of the mating element.

Optical fiber connectors are available in a variety of types. Among them, MPO (multi-fiber push on) connectors are multi-core, multi-channel connectors suitable for deployment of high-density optical fibers in limited spaces. They typically include a housing and a ferrule for securing one or more optical fibers. The ferrule extends from the housing, so that when the connector is mated to other elements, the optical fibers in the ferrule can be optically coupled to the optical path of the mating elements.

Conventional MPO-type multi-optical fiber male connectors have guide pins at the front end, while female connectors have corresponding guide holes at the front end. When two optical fiber connectors are positioned at two opposite openings of an adapter, hooks on the adapter may engage with two notches on the two optical fiber connectors, and the guide pins may be inserted into the guide holes. In high-density environments, such as within equipment cabinets where plurality of connectors are closely arranged and fully inserted to a panel of an apparatus, users cannot easily disengage the connectors. Therefore, pull handles are often additionally installed on the optical fiber connectors in the related art, allowing the optical fiber connectors to be disengaged by pulling on the pull handles.

### SUMMARY

The invention provides an optical fiber connector that achieves an action of pulling and unlocking the optical fiber connector through a tail sleeve.

According to an embodiment of the invention, an optical fiber connector includes a housing, a ferrule, a securing member, and a tail sleeve. At least one optical fiber is fixed into the ferrule, the ferrule is assembled into the housing, and a portion of the ferrule extends from a first end of the housing. One end of the optical fiber distal from the ferrule extends from a second end of the housing, and the first end and the second end are two opposite ends of the housing. The securing member is sheathed onto an exterior of the housing, and the securing member has a first securing portion. The tail sleeve is sheathed onto the exterior of the housing from the second end to cover the second end and the optical fiber extending from the second end. The tail sleeve has a second securing portion that engages with the first securing portion, such that the tail sleeve is forced to drive the securing member to pull the optical fiber connector out of an adapter.

Based on the above, the optical fiber of the optical fiber connector provided in one or more embodiments of the invention is assembled into the housing after being fixed into the ferrule. More importantly, the tail sleeve of the optical fiber connector extends from the second end of the housing toward the first end, so as to at least cover the housing and the securing member sheathed onto the housing while the first securing portion of the securing member and the second securing portion of the tail sleeve mutually engage with each other, whereby the tail sleeve, the securing member, the housing, the ferrule, and the optical fiber therein become a linked (or synchronized) structure. Accordingly, when a user holds and applies force to the tail sleeve, the remaining components (the securing member, the housing, the ferrule, and the optical fiber) can be correspondingly driven, allowing the optical fiber connector to be smoothly driven to perform plugging and unplugging actions relative to the adapter. This allows the user to complete the required plugging and unplugging actions simply by applying force to the tail sleeve and effectively position the user's force-applying location distal from the first end of the housing (i.e., adjacent to the adapter). The advantage of this configuration lies in that when the optical fiber connector and the adapter are arranged in a densely arranged layout (i.e., when these optical fiber connectors are closely adjacent and fully inserted into a panel of an apparatus), the user's hand may have difficulty accessing the adjacent portion of the optical fiber connector and the adapter (i.e., the first end of the housing), thereby making the operation inconvenient. By shifting the force-applying location to be distal from the first end and to the tail sleeve, the invention facilitates the plugging and unplugging actions and also reducing the risk of component damage due to the linked (or synchronized) movement between the components.

To make the above features and advantages of the invention more apparent and understandable, embodiments are particularly described below with detailed descriptions in conjunction with the accompanying drawings.

### BRIEF DESCRIPTION OF THE DRAWINGS

FIG. 1 is a schematic diagram illustrating the mating of a connector via an adapter according to an embodiment of the invention.
FIG. 2 is a schematic diagram of the optical fiber connector depicted in FIG. 1.
FIG. 3 is a schematic exploded diagram of the optical fiber connector depicted in FIG. 2.
FIG. 4 and FIG. 5 are cross-sectional diagrams of the optical fiber connector depicted in FIG. 2 from different viewing angles.

### DESCRIPTION OF THE EMBODIMENTS

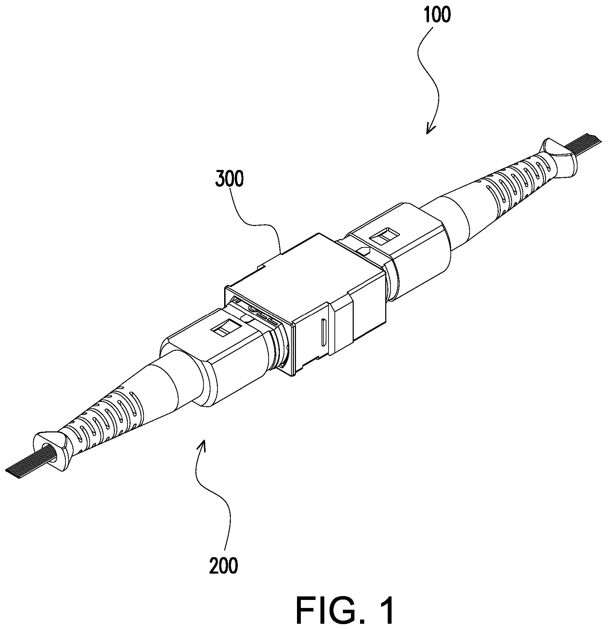

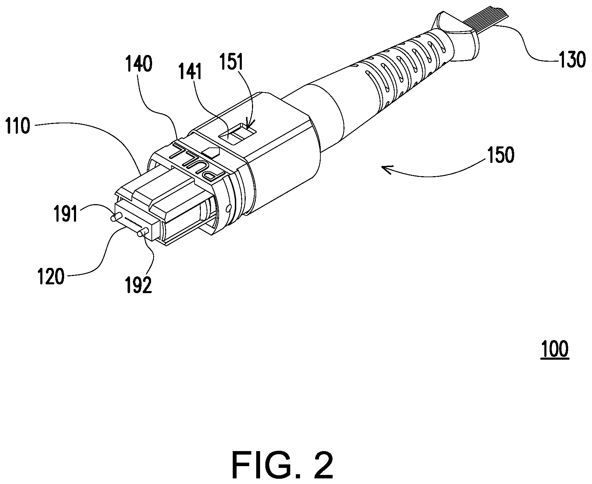

FIG. 1 is a schematic diagram illustrating the mating of a connector via an adapter according to an embodiment of the invention. FIG. 2 is a schematic diagram of the optical fiber connector depicted in FIG. 1. Please refer to FIG. 1 and FIG. 2 simultaneously. In this embodiment, optical fiber connectors 100 and 200 are, for instance, MPO (multi-fiber push on) connectors, which are mutually mated through an adapter 300, wherein the optical fiber connector 100 is, for instance, a male connector, and the optical fiber connector 200 is, for instance, a female connector, which are respectively inserted into the adapter 300 through two opposite openings of the adapter 300 to complete the mating.

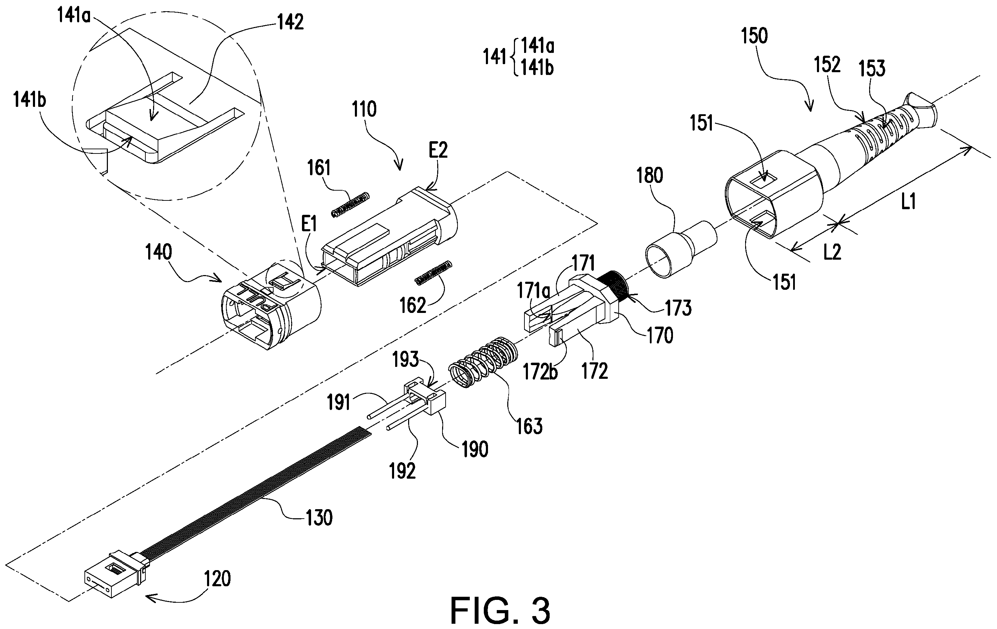

FIG. 3 is a schematic exploded diagram of the optical fiber connector depicted in FIG. 2. Please refer to FIG. 1 to FIG. 3 simultaneously. The optical fiber connector 100 includes a housing 110, a ferrule 120, a securing member 140, and a tail sleeve 150. At least one optical fiber is fixed into the ferrule 120 (in this embodiment, a plurality of optical fibers 130 are taken as an example). The ferrule 120 is assembled into the housing 110, and a portion of the ferrule 120 extends from a first end E1 of the housing 110. One end of the optical fiber 130 distal from the ferrule 120 extends from a second end E2 of the housing 110. The first end E1 and the second end E2 are two opposite ends of the housing 110. The securing member 140 is sheathed onto an exterior of the housing 110. The securing member 140 has a first securing portion 141. The tail sleeve 150 is sheathed onto the exterior of the housing 110 from the second end E2 to cover the second end E2 and the optical fiber 130 extending from the second end E2. The tail sleeve 150 has a second securing portion 151 that engages with the first securing portion 141, such that the tail sleeve 150 is forced to drive the securing member 140 to pull the optical fiber connector 100 out of the adapter 300.

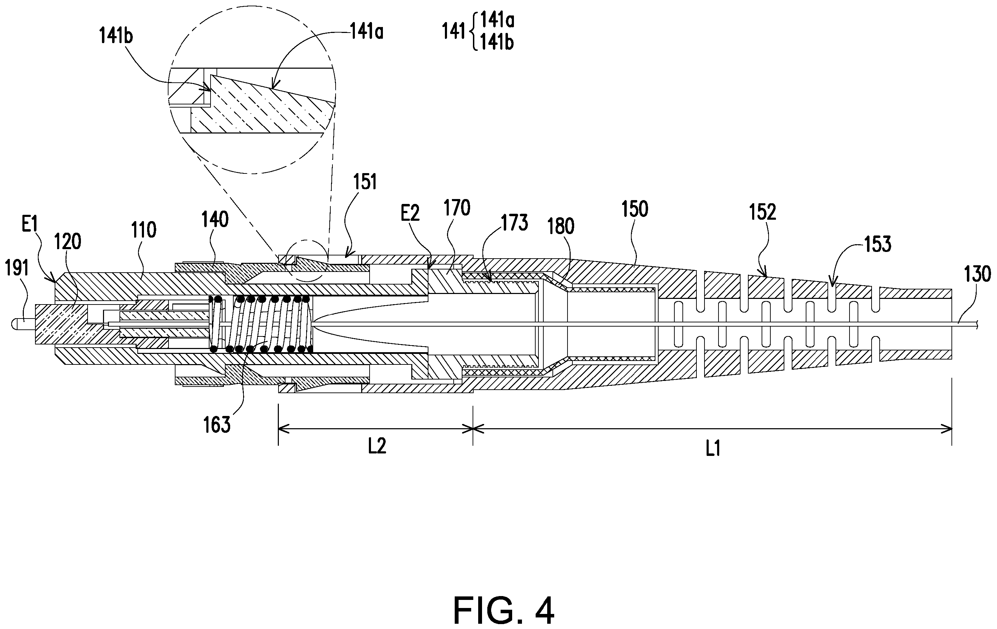

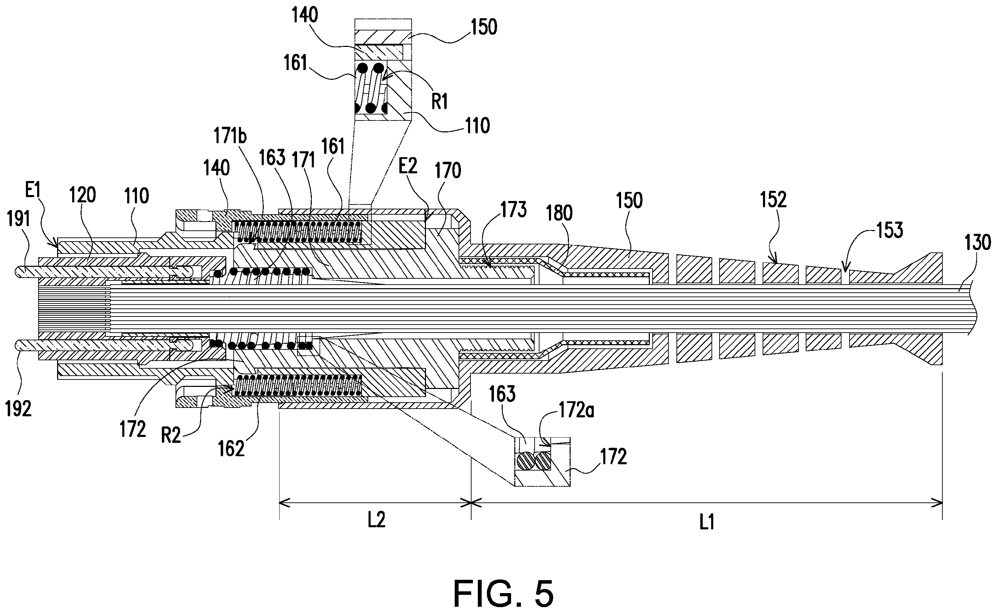

FIG. 4 and FIG. 5 are cross-sectional diagrams of the optical fiber connector depicted in FIG. 2 from different viewing angles. Please refer to FIG. 3 to FIG. 5 simultaneously. The optical fiber connector 100 further includes a receiving block 170, a fixing tube 180, a base 190, first elastic members 161 and 162, and a second elastic member 163. Two side arms 171 and 172 extend from a front surface of the receiving block 170 and engage with an inner wall of the housing 110. A helical tube 173 extends from a rear surface of the receiving block 170. The fixing tube 180 is screwed to the helical tube 173. An outer wall of the fixing tube 180 abuts an inner wall of the tail sleeve 150.

The base 190 is disposed within the housing 110 and located between the receiving block 170 and the ferrule 120. The second elastic member 163 is disposed between the two side arms 171 and 172 and abuts the two side arms 171 and 172 and the ferrule 120, wherein the two side arms 171 and 172 respectively have stepped portions 171a and 172a that abut one end of the second elastic member 163. In particular, the second elastic member 163 abuts the two stepped portions 171a and 172a of the two side arms 171 and 172 and the notch 193 of the base 190. Besides, the base 190 further has two guide pins 191 and 192 abutting the ferrule 120 together with the base 190, so that the two guide pins 191 and 192 respectively pass through and partially protrude from the ferrule 120 and the housing 110, as shown in FIG. 2, FIG. 4, and FIG. 5.

Besides, as shown in FIG. 5, the securing member 140 and the housing 110 are assembled to form a pair of accommodation chambers R1 and R2 located on two opposite sides of the housing 110, the pair of first elastic members 161 and 162 are respectively located in the accommodation chambers R1 and R2, and each of the first elastic members 161 and 162 abuts the housing 110 and the securing member 140. After one end of the optical fiber 130 is fixed to the ferrule 120, the remaining portion sequentially passes through the base 190, the second elastic member 163, space between the two side arms 171 and 172, and the receiving block 170, followed by the helical tube 173, the fixing tube 180, and the tail sleeve 150.

Please refer to FIG. 3 and FIG. 4. The first securing portion 141 is one of a securing protrusion and a securing hole, and the second securing portion 151 is the other one of the securing protrusion and the securing hole. In this embodiment, the first securing portion 141 exemplarily serves as a securing protrusion, and the second securing portion 151 exemplarily serves a securing hole. In another embodiment not shown in the drawings, the aforementioned structure, if turned upside down, can still smoothly achieve the securing effect. Moreover, the securing member 140 provided this embodiment further has an elastic arm structure 142, and the first securing portion 141 as the securing protrusion is located at the tail end of the elastic arm structure 142. To be specific, a first side of the securing protrusion is a gentle slope 141a, and a second side of the securing protrusion is a cliff 141b. Therefore, a securing hole (the second securing portion 151) moves along the gentle slope 141a in a first direction D1 until the securing hole falls pass the cliff 141b and then engages with the securing protrusion (the first securing portion 141) in a second direction D2. That is, the securing member 140 and the tail sleeve 150 applying force in the second direction D2 can generate a structural interference, wherein the first direction D1 and the second direction D2 are opposite to each other. Accordingly, when a user applies force to the tail sleeve 150 in the first direction D1 (equivalent to providing thrust to the optical fiber connector 100), the tail sleeve 150 can complete mutual engagement with the securing member 140 or cause the optical fiber connector 100 to be inserted into the adapter 300 (please refer to FIG. 1). When the user applies force to the tail sleeve 150 in the second direction D2 (equivalent to providing pulling force), the optical fiber connector 100 can be smoothly unplugged from the adapter 300 (please refer to FIG. 1).

In addition, the tail sleeve 150 provided in this embodiment has a conical surface 152 that is distal from the housing 110 and gradually tapers inward. The tail sleeve 150 further has a plurality of force-applying grooves 153 disposed on the conical surface 152. These grooves 153 provide gripping portions for the user when applying force and increase friction through structural features. Therefore, using the housing 110 as a reference (i.e., considered as a fixed structure without movement), when the securing member 140 moves in the second direction D2, compresses and deforms the first elastic members 161 and 162, and accumulates elastic force, and when the elastic force is released, the securing member 140 is driven to move in the first direction D1, wherein the second direction D2 is the direction in which the optical fiber connector 100 is unplugged from the adapter 300. In other words, since the tail sleeve 150 and the securing member 140 are in structural interference in the second direction D2, when the user intends to unplug the optical fiber connector 100 from the adapter 300, force applied in the second direction D2 to the tail sleeve 150 causes the securing member 140 to perform the aforementioned operation. This results in the smooth and continuous movement of the housing 110 and the components assembled within the housing 110 distal from the adapter 300 to complete the unplugging action, wherein an engaging direction in which the first securing portion 141 and the second securing portion 151 are engaged aligns with the direction in which the optical fiber connector 100 is unplugged from the adapter 300, i.e., the second direction D2.

Please refer again to FIG. 3 to FIG. 5. The reason why the aforementioned plugging and unplugging action can be performed smoothly lies in that in the optical fiber connector 100 provided in this embodiment, the tail sleeve 150, the securing member 140, the housing 110, and the ferrule 120 are arranged in a layered nesting configuration from outside to inside. Using the housing 110 as a boundary, the ferrule 120, the base 190, the second spring 163, and the receiving block 170 inside the housing 110 substantially engage with the inner wall of the housing 110 by outer hook portions 171b and 172b of the two side arms 171 and 172 of the receiving block 170 (as shown in FIG. 5), and an outer engaging portion of the ferrule 120 engages with the inner wall of the housing 110, thereby jointly completing the assembly and fixation of components within the housing 110.

Correspondingly, the tail sleeve 150 provided in this embodiment includes a head section L2 and a tail section L1. The head section L2 has the second securing portion 151 and is layered over the housing 110 and the securing member 140, and the tail section L1 tapers relative to the head section L2 to cover the optical fiber 130 extending from the housing 110. As shown in FIG. 4 and FIG. 5, the portion of the optical fiber 130 extending from the housing 110 is protected by the helical tube 173 of the receiving block 170, the fixing tube 180, and the tail sleeve 150.

Accordingly, through the aforementioned corresponding relationship among the tail sleeve, the securing member, and the housing, when a user applies force to the tail sleeve, the applied force acts simultaneously on the housing and the components therein. In other words, the user can simply apply force to the tail sleeve to smoothly drive the overall structure of the optical fiber connector without concern for relative displacement between the components that may lead to structural damage or detachment.

It should be noted that although the optical fiber connector 100 is taken as an example above, this should not be construed as limiting the scope of the invention. As shown in FIG. 1, the optical fiber connector 200 can also have the aforementioned component configuration, enabling the optical fiber connector 200 to perform smooth plugging and unplugging actions relative to the adapter 300.

To sum up, in one or more embodiments of this invention provided above, the optical fiber of the optical fiber connector is assembled into the housing after being fixed into the ferrule, and the tail sleeve of the optical fiber connector extends from the second end of the housing toward the first end, so as to at least cover the housing and the securing member sheathed onto the housing. Meanwhile, through the mutual engagement between the first securing portion of the securing member and the second securing portion of the tail sleeve, the tail sleeve, the securing member, the housing, the ferrule, and the optical fiber therein become a linked (or synchronized) structure. In particular, the layered nesting configuration defined by the tail sleeve, the housing, and the securing member ensures that when a user holds the tail sleeve, the applied force can be effectively transmitted through the layered nesting configuration, thereby allowing the user to smoothly unplug the optical fiber connector from the adapter or insert the optical fiber connecter into the adapter.

In other words, the user can simply apply force to the tail sleeve to complete the required plugging and unplugging actions, effectively positioning the user's force-applying location distal from the first end of the housing (i.e., adjacent to the adapter). The advantage of this configuration lies in that when the optical fiber connector and the adapter are arranged in a densely arranged layout (i.e., when these optical fiber connectors are closely adjacent and fully inserted into a panel of an apparatus), the user's hand may have difficulty accessing the adjacent portion of the optical fiber connector and the adapter (i.e., the first end of the housing), thereby making the operation inconvenient. Thanks to the aforementioned features, by shifting the force-applying location to be distal from the first end and to the tail sleeve, the invention facilitates the plugging and unplugging actions. Meanwhile, due to the linked (or synchronized) movement between the components, the risk of component damage caused by the plugging and unplugging actions can be prevented.

## Claims

1. An optical fiber connector (100,200), comprising:
a housing (110);
a ferrule (120), having at least one optical fiber (130) fixed into the ferrule (120), the ferrule (120) being assembled into the housing (110), wherein a portion of the ferrule (120) extends from a first end (E1) of the housing (110), one end of the at least one optical fiber (130), distal from the ferrule (120), extends from a second end of the housing (110), and the first end (E1) and the second end (E2) are two opposite ends of the housing (110);
a securing member (140), sheathed onto an exterior of the housing (110) and having a first securing portion (141); and
a tail sleeve (150), sheathed onto the exterior of the housing (110) from the second end to cover the second end and the at least one optical fiber (130) extending from the second end, the tail sleeve (150) having a second securing portion (151) engaging with the first securing portion (141), such that the tail sleeve (150) is forced to drive the securing member (140) to pull the optical fiber connector out of an adapter (300).

2. The optical fiber connector according to claim 1, wherein the first securing portion (141) is one of a securing protrusion and a locking hole, and the second securing portion (151) is the other one of the securing protrusion and the locking hole.

3. The optical fiber connector according to claim 2, wherein the securing member (140) or the tail sleeve (150) has an elastic arm structure (142), and the securing protrusion is located at a tail end of the elastic arm structure (142).

4. The optical fiber connector according to claim 2, wherein a first side of the securing protrusion is a gentle slope, and a second side of the securing protrusion is a cliff, such that the locking hole moves along the gentle slope in a first direction until the locking hole falls pass the cliff and then engages with the securing protrusion in a second direction, wherein the first direction and the second direction are opposite to each other.

5. The optical fiber connector according to claim 1, wherein the tail sleeve (150) has a conical surface (152) distal from the housing (110) and gradually tapering inward, and the tail sleeve (150) further has a plurality of force-applying grooves (153) located on the conical surface (152).

6. The optical fiber connector according to claim 1, wherein the securing member (140)and the housing (110), when assembled together, form a pair of accommodation chambers (R1, R2) located on the two opposite sides of the housing (110), the optical fiber connector further comprises a pair of first elastic members (161,162) respectively located in the pair of accommodation chambers (R1, R2), and each of the first elastic members (161,162) abuts the housing (110) and the securing member (140).

7. The optical fiber connector according to claim 6, wherein with the housing (110) as a reference, when the securing member (140) moves in a second direction, compresses and deforms the pair of first elastic members (161,162), and accumulates an elastic force, and when the elastic force is released, the securing member (140) is driven to move in a first direction, the first direction is opposite to the second direction, and the second direction is a direction in which the optical fiber connector is pulled out of the adapter (300).

8. The optical fiber connector according to claim 1, wherein an engaging direction in which the first securing portion (141) and the second securing portion (151) are engaged aligns with a direction in which the optical fiber connector is pulled out of the adapter (300).

9. The optical fiber connector according to claim 1, further comprising a receiving block (170) and a fixing tube (180), wherein two side arms (171,172) extend from a front surface of the receiving block (170) and engage with an inner wall of the housing (110), a helical tube (173) extends from a rear surface of the receiving block (170) and is screwed to the fixing tube (180), an outer wall of the fixing tube (180) abut an inner wall of the tail sleeve (150), and the at least one optical fiber (130) sequentially passes through the receiving block (170), the fixing tube (180), and the tail sleeve (150).

10. The optical fiber connector according to claim 9, further comprising a second elastic member (163) disposed between the two side arms (171,172) and abutting the two side arms (171,172) and the ferrule (120), wherein each of the two side arms (171,172) respectively has a stepped portion (171a,172a) to abut one end of the second elastic member (163).

11. The optical fiber connector according to claim 10, further comprising a base (190) disposed in the housing (110) and located between the receiving block (170) and the ferrule (120), wherein the second elastic member (163) abuts the two stepped portions(171a,172a) of the two side arms (171,172) and the base (190).

12. The optical fiber connector according to claim 11, wherein the base (190) further has two guide pins abutting the ferrule (120), such that the two guide pins respectively pass through and partially protrude from the ferrule (120) and the housing (110).

13. The optical fiber connector according to claim 1, wherein the tail sleeve (150), the securing member (140), the housing (110), and the ferrule (120) are arranged in a layered nesting configuration from outside to inside.

14. The optical fiber connector according to claim 1, wherein the tail sleeve (150) comprises a head section (L2) and a tail section (L1), wherein the head section (L2) has the second securing portion (151) and is layered over the housing (110) and the securing member (140) in a layered manner, and the tail section (L1) tapers relative to the head section (L2) to cover the at least one optical fiber (130) extending from the housing (110).
